(19) Europäisches Patentamt
European Patent Office
Office européen des brevets

(11) **EP 4 575 584 A1**

(12) **DEMANDE DE BREVET EUROPEEN**

(43) Date de publication:
**25.06.2025 Bulletin 2025/26**

(21) Numéro de dépôt: **24221956.6**

(22) Date de dépôt: **19.12.2024**

(51) Classification Internationale des Brevets (IPC):
**G01T 1/164** (2006.01)  **G01T 1/24** (2006.01)

(52) Classification Coopérative des Brevets (CPC):
**G01T 1/247; G01T 1/1647**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **20.12.2023 FR 2314679**

(71) Demandeur: **Commissariat à l'Energie Atomique et aux Energies Alternatives**
**75015 Paris (FR)**

(72) Inventeurs:
• **MONTEMONT, Guillaume**
**38054 GRENOBLE CEDEX 09 (FR)**
• **DELCOURT, Alexandre**
**38054 GRENOBLE CEDEX 09 (FR)**

(74) Mandataire: **INNOV-GROUP**
**209 Avenue Berthelot**
**69007 Lyon (FR)**

(54) **PROCÉDÉ DE CALIBRATION NON SUPERVISÉ D'UN DÉTECTEUR**

(57) Procédé de détermination de paramètres régissant le propriétés de transport de porteurs de charges dans un détecteur de rayonnement ionisant. Le procédé consiste à irradier le détecteur et à simuler une propagation de nuages de porteurs de charge vers des électrodes du détecteur, de façon à comparer le signal résultant de la simulation et le signal mesuré. Cela permet de définir une erreur, qui est rétropropagée jusqu'au lieu de l'interaction dans le détecteur. Au cours de la rétropropagation, les paramètres de transport de porteurs de charge sont mis à jour, de façon à minimiser l'erreur. L'opération de propagatio,/rétropropagation est itérative et se poursuit jusqu'à l'arrêt d'un critère d'arrêt des itérations.

**Fig. 3**

EP 4 575 584 A1

**Description**

**DOMAINE TECHNIQUE**

Le domaine technique de l'invention est la calibration de détecteurs de rayonnement ionisant, par exemple un rayonnement X ou gamma, et en particulier pour l'imagerie spectrométrique.

**ART ANTERIEUR**

Les gamma caméras sont des dispositifs permettant de former une image pour établir une cartographie de sources irradiantes dans un environnement donné, et en particulier dans les installations nucléaires, pour des applications de diagnostic médical, ou encore pour des applications de type contrôle non destructif, par exemple le contrôle de bagages.

Certaines gamma caméras sont constituées d'une matrice bidimensionnelle de pixels, reliée à un matériau détecteur. Le matériau détecteur est généralement un matériau semi-conducteur, par exemple CdTe ou CdZnTe. Sous l'effet d'une interaction d'un rayonnement ionisant dans le matériau détecteur, un ou plusieurs pixels génèrent une impulsion électrique, dont l'amplitude est corrélée avec l'énergie libérée par le rayonnement lors de l'interaction. Chaque pixel est raccordé à un circuit électronique de traitement des impulsions.

Chaque pixel est formé d'une électrode, qui fait usuellement fonction d'anode. Lorsqu'un rayonnement incident interagit dans le matériau détecteur, des électrons sont libérés dans le matériau détecteur. Les électrons sont collectés par une anode. Cette dernière génère une impulsion dont l'amplitude dépend du nombre d'électrons collectés par l'anode, ce nombre étant généralement proportionnel à une énergie perdue par le rayonnement ionisant dans le matériau détecteur.

Chaque détecteur s'étend sur quelques centaines de millimètres de côté. Pour des raisons de compacité, la matrice de pixels comporte généralement cent, ou quelques centaines, de pixels par ligne et par colonne.

Le CdZnTe, ou CZT, est souvent exploité comme matériau de détection dans les gamma caméras. En effet, ce matériau combine de nombreux avantages pour être utilisé dans l'imagerie de rayonnements X ou gamma d'énergie élevée :

- un numéro atomique Z et une densité élevés pour un pouvoir d'absorption des photons incidents intéressants. ;
- une largeur de la bande interdite, suffisamment large pour pouvoir être utilisé à température ambiante, tout en étant limitée pour garder une énergie de création de paires électron-trou Epaire assez faible.
- des propriétés de transport de charges intéressantes (durée de vie $\tau$ et mobilité des porteurs $\mu$) afin d'avoir un libre parcours moyen $\mu\tau$ le plus élevé possible.

De nombreux travaux ont été menés au fil des années afin d'améliorer la composition, la croissance des cristaux, la géométrie et l'électronique de traitement autour de ces détecteurs dans le but d'optimiser leurs performances.

Néanmoins l'utilisation du CZT présente une difficulté principale, qui est la présence de différents types de défauts dans la maille cristalline qui modifient les propriétés du matériau et ainsi impactent les signaux de sortie du détecteur. Ces défauts peuvent être de différentes natures et tailles : des lacunes Cd à l'échelle atomique, ou des sous-joints de grains pouvant mesurer plusieurs cm de long. Ces défauts, qui apparaissent lors de la croissance des cristaux de CZT, freinent le développement de détecteurs de volume plus important et de manière générale dégrade leurs performances, en produisant une réponse non uniforme, variant d'un pixel à l'autre.

Ces défauts font apparaître des états d'énergie intermédiaires dans la bande interdite. Quand un porteur se retrouve dans un de ces nouveaux états d'énergie, il peut soit se recombiner soit revenir dans son état initial. Les porteurs piégés créent des charges d'espace, qui modifient le champ électrique à l'intérieur du détecteur. Le piégeage est non uniforme et a un impact sur l'uniformité du champ électrique.

En effet, ces défauts entraînent une erreur sur les signaux induits par les porteurs de charge et donc sur les signaux collectés sur les électrodes qui perturbent le courant mesuré en sortie qui est utilisé comme donnée permettant de localiser la source avec les résolutions les plus précises possibles.

Jusqu'à présent, les réponses du détecteur peuvent être apprises, en mettant des algorithmes supervisés, de type maximum de vraisemblance ou des réseaux de neurones. Mais cela suppose de disposer de données précises pour chaque détecteur pris individuellement. En effet, les défauts affectent différemment chaque détecteur. Ainsi, la mise en oeuvre d'un algorithme supervisé nécessite de disposer de données fiables quant à la position d'interactions dans le détecteur et l'énergie déposée au cours de chaque interaction. Cela suppose par exemple un balayage d'un détecteur à l'aide d'un faisceau fin de photons, de préférence monoénergétiques. Un tel balayage n'est guère envisageable pour caractériser systématiquement les détecteurs lors de leur fabrication.

US2021/133589 décrit par exemple un procédé permettant un apprentissage supervisé des caractéristiques d'un détecteur semi-conducteur, en irradiant le détecteur de façon contrôlée en position, énergie et temps. A partir de données d'apprentissage, comportant le signal détecté et des caractéristiques dites de vérité terrain « ground truth », on ajuste les paramètre d'un réseau de neurones, pour apprendre la réponse du détecteur. Mais cela suppose de disposer de données de vérité terrain, ce qui est contraignant.

Les inventeurs proposent une solution permettant d'effectuer un apprentissage non supervisé, de façon à apprendre la fonction de réponse d'un détecteur, à partir d'une irradiation de ce dernier peu contraignante. Par irradiation non contraignante, on entend une irradiation qui n'est pas nécessairement collimatée, en étant par exemple homogène. L'ensemble du détecteur peut être irradié, de façon à apprendre la réponse de l'ensemble formé par le matériau détecteur et les électrodes. Il s'agit de permettre d'effectuer des simulations précises de signaux détectés par le détecteur, en prenant en compte des défauts inhérents au recours à un matériau de détection de type CdZnTe.

## EXPOSE DE L'INVENTION

Un premier objet de l'invention est un procédé d'estimation d'un signal mesuré en un pixel d'un détecteur, le détecteur comportant plusieurs électrodes, formant des pixels, reliées à un matériau détecteur, le matériau détecteur étant un semi-conducteur, chaque électrode étant configurée pour collecter des porteurs de charge se déplaçant, à travers le matériau détecteur, sous l'effet d'un champ électrique, suite à une interaction d'un photon X ou gamma dans le matériau détecteur, le procédé comportant :

- irradiation du détecteur avec des photons X ou gamma, de façon à générer des interactions dans le matériau détecteur, chaque interaction formant un signal de détection mesuré par au moins une électrode;
- pour différentes interactions détectées, association d'un vecteur d'état, comportant au moins une position, une charge, et chaque signal de détection, le vecteur d'état passant d'un état initial lors de la survenue de l'interaction, à un état final, lors de la collecte des électrons, générés par l'interaction, par au moins une électrode ;

le procédé étant caractérisé en ce qu'il comporte, pour chaque interaction détectée :

  - (i) initialisation du vecteur d'état initial ;
  - (ii) à partir du vecteur d'état initial, ou d'un état initial résultant d'une itération précédente, mise en oeuvre d'un modèle de propagation des porteurs de charges dans le matériau semi-conducteur, pour estimer le vecteur d'état final , le modèle de propagation étant basé sur un vecteur de paramètres, paramétrisant au moins une propriété de transport des porteurs de charge à travers le matériau détecteur, vers les électrodes ;
  - (iii) calcul d'une erreur, représentative d'un écart entre le signal de détection estimé dans le vecteur d'état final et le signal de détection mesuré ;
  - (iv) rétropropagation d'un gradient de l'erreur de l'état final vers l'état initial, le gradient de l'erreur étant calculé par rapport à au moins un terme du vecteur d'état, et par rapport à plusieurs paramètres du vecteur de paramètres ;
  - (v) mise à jour du vecteur d'état, à l'instant initial, et du vecteur de paramètre, et réitération des étapes (ii) à (v) jusqu'à l'atteinte d'un critère d'arrêt des itérations ;

le procédé étant tel que les étapes (i) à (v) étant mises en oeuvre par une unité de traitement reliée au détecteur.

Selon une possibilité, le matériau détecteur est discrétisé en voxels, et l le vecteur de paramètres comporte, pour chaque voxel, une propriété de transport des porteurs de charge dans le détecteur.

Selon une possibilité, la propriété de transport de porteurs de charges comporte :

- une valeur du champ électrique ;
- et/ou un gradient du champ électrique selon au moins une direction ;
- et/ou une valeur d'une divergence du champ électrique;
- et/ou une probabilité de piégeage dans le voxel.

Selon une possibilité,

- les étapes (i) à (v) sont mises en oeuvre pour différentes interactions, de façon à mettre à jour le vecteur de paramètres à chaque mise en oeuvre des étapes (i) à (v) ;
- le vecteur de paramètres est ensuite mis à jour en combinant les vecteurs de paramètres mis à jour lors de chaque interaction.

Selon une possibilité,

- pour chaque interaction, le temps entre l'état initial et l'état final est discrétisé en pas temporels
- l'étape (ii) comporte une intégration numérique d'une fonction d'évolution ($f_\theta$), la fonction d'évolution traduisant une évolution temporelle de la position et de la charge des porteurs de charge, ainsi qu'une évolution de chaque signal de détection, l'intégration numérique étant réalisée successivement entre chaque pas temporels, entre l'état initial et l'état final.

L'étape (iv) peut comporter une intégration numérique d'une équation de propagation adjointe, traduisant une évolution temporelle du gradient de l'erreur, l'intégration numérique étant réalisée successivement entre chaque pas temporels, entre l'état final et l'état initial.

Un deuxième objet de l'invention est un procédé d'apprentissage d'un algorithme d'intelligence artificielle supervisé, destiné à simuler une réponse d'un détecteur, le détecteur comportant plusieurs électrodes, formant des pixels, reliés à un matériau semi-conducteur, chaque pixel étant configuré pour collecter des porteurs de charge se déplaçant, à travers le matériau semi-conducteur, sous l'effet d'un champ électrique, suite à un interaction d'un photon X ou gamma dans le matériau semi-conducteur, le procédé comportant les étapes suivantes :

- a) définition d'une position d'une interaction dans le détecteur et d'une énergie libérée lors de ladite interaction ;
- b) estimation d'un signal de détection mesuré par au moins une électrode du détecteur, en mettant en oeuvre les étapes un procédé selon le premier objet de l'invention;
- c) réitération des étapes a) et b) de façon à former une base de données reliant, pour chaque interaction définie, le signal mesuré en au moins un pixel;
- d) utilisation de la base de données pour effectuer un apprentissage supervisé de l'algorithme d'intelligence artificielle.

L'algorithme d'intelligence artificielle peut être de type perceptron multicouches.

Un troisième objet de l'invention est un détecteur, comportant plusieurs électrodes, formant des pixels, reliés à un matériau semi-conducteur, chaque pixel étant configuré pour collecter des porteurs de charges se déplaçant, à travers le matériau semi-conducteur, sous l'effet d'un champ électrique, suite à une interaction d'un photon X ou gamma dans le matériau semi-conducteur, le détecteur étant relié à une unité de traitement, configurée pour mettre en oeuvre les étapes (i) à (v) d'un procédé selon le premier objet de l'invention.

Un quatrième objet de l'invention est un détecteur, comportant plusieurs électrodes, formant des pixels, reliés à un matériau semi-conducteur, chaque pixel étant configuré pour collecter des porteurs de charges se déplaçant, à travers le matériau semi-conducteur, sous l'effet d'un champ électrique, suite à une interaction d'un photon X ou gamma dans le matériau semi-conducteur, le détecteur étant relié à une unité de traitement, configurée pour estimer une énergie libérée par l'interaction et/ou une position de l'interaction, l'unité de traitement mettant en oeuvre un algorithme d'intelligence artificielle supervisé dont l'apprentissage est réalisé selon le deuxième objet de l'invention.

L'invention sera mieux comprise à la lecture de l'exposé des exemples de réalisation présentés, dans la suite de la description, en lien avec les figures listées ci-dessous.

**FIGURES**

La figure 1 schématise un détecteur.

La figure 2A montre les principales étapes d'un procédé de détermination d'une réponse d'un détecteur.

La figure 2B illustre les étapes discutées en lien avec la figure 2A.

Les figures 2C et 2D montrent une prise en compte de cinq ou de neuf anodes dans la détermination d'une charge collectée.

La figure 3 détaille certaines opérations décrites en lien avec la figure 2.

Les figures 4A à 4H montrent les performances d'estimation de la profondeur d'interaction en mettant en oeuvre l'invention, au cours d'itérations successives.

La figure 5A montre une comparaison entre une estimation de positions d'interactions en mettant en oeuvre l'invention, et les positions d'interactions mesurées.

La figure 5B montre une comparaison entre une estimation de profondeurs d'interactions en mettant en oeuvre l'invention, et les profondeurs d'interactions mesurées.

Les figures 5C et 5D correspondent respectivement aux figures 5A et 5B, avec une prise en compte d'un bruit.

La figure 6A représente une cartographie mesurée d'une grandeur « CIE », qui correspond à un ratio entre la charge collectée et la charge déposée.

La figure 6B montre une cartographie estimée de la CIE en mettant en oeuvre le procédé.

**EXPOSE DE MODES DE REALISATION PARTICULIERS**

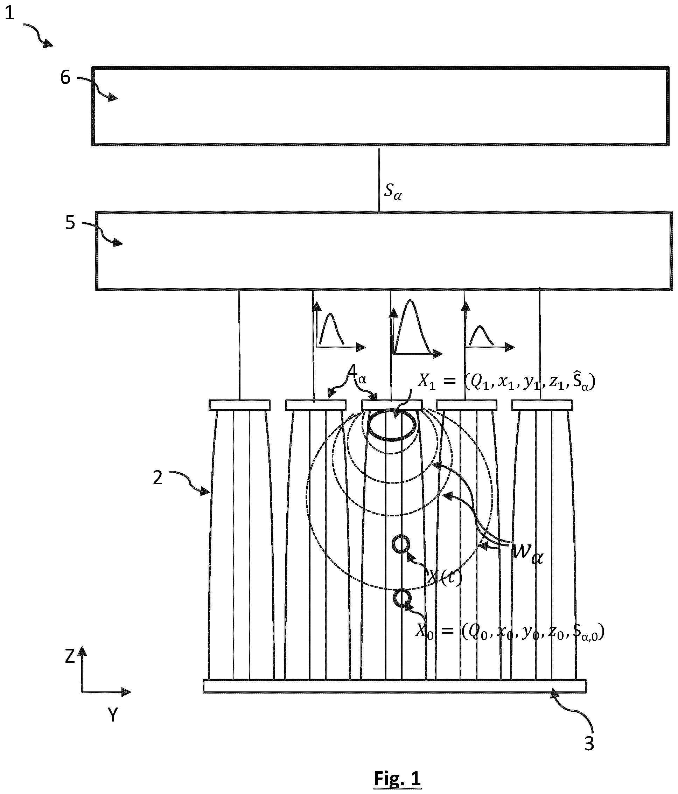

La figure 1 schématise une structure d'un détecteur 1. Le détecteur comporte un matériau détecteur 2, polarisé entre une cathode 3 et différentes anodes 4. Les anodes sont reliées à un circuit de lecture 5, permettant l'analyse de chaque signal de détection formé au niveau de chaque anode.

Sous l'effet d'une interaction dans le matériau détecteur, des porteurs de charges sont créés : les électrons migrent vers les anodes, tandis que les trous migrent vers la cathode. Dans un semi-conducteur comme le CZT, les différences de propriétés de transport entre les électrons et les trous font que l'exploitation du signal électron est beaucoup plus intéressante du point de vue des performances du détecteur. Par la suite, on ne prend en compte que le transport des électrons à travers le détecteur, sachant que l'invention peut également s'appliquer à d'autres types de porteurs de charges, par exemple des trous. Chaque interaction donne lieu à une formation d'un nuages d'électrons, migrant vers une ou plusieurs anodes.

Chaque anode forme un pixel, permettant une mesure, suite à chaque interaction, d'un signal de détection. Au cours d'une interaction, une ou plusieurs anodes détectent une impulsion. A partir de chaque impulsion, on forme un signal de détection $S_\alpha$, qui permet de localiser l'interaction dans le matériau détecteur. Le signal de détection peut comporter une ou plusieurs caractéristiques de l'impulsion détectée, comme décrit dans US9322937. L'indice $\alpha$ désigne chaque anode ayant reçu un signal de détection exploitable. Le nombre d'anodes ayant reçu un signal de détection exploitable peut varier entre 1 et 9, voire davantage, comme décrit par la suite. Pour chaque interaction, on distingue un instant initial $t_0$, qui correspond à la survenue de l'interaction, et un instant $t_1$, qui correspond à la collecte des électrons par une ou plusieurs anodes.

La charge collectée $Q_1$, atteignant les anodes, permet d'estimer la charge $Q_0$ déposée dans le matériau détecteur lors de l'interaction. On peut assigner, à chaque interaction, un état X des porteurs de charges générés par l'interaction, qui varie entre un état initial $X_0$, lors de la survenue de l'interaction, et un état final $X_1$, correspondant à la collecte des charges par les anodes. L'état initial $X_0$ est caractérisé par les grandeurs $(Q_0, x_0, y_0, z_0, S_{\alpha,0})$, correspondant à la charge libérée par le photon dans le détecteur, à la position de l'interaction et au signal induit au niveau des électrodes lors de l'interaction. L'état final $X_1$ est caractérisé par les grandeurs $(Q_1, z_1, x_1, y_1, S_{\alpha,1})$, correspondant à la charge collectée aux anodes et la position d'un centroïde du nuage de porteurs de charge atteignant les électrodes, ainsi qu'au signal induit sur chaque électrode, ce dernier pouvant être mesuré.

Sur la figure 1, on a représenté des lignes de champ, le long desquelles se propagent les porteurs charges générés lors de l'interaction, entre l'état initial $X_0$, un état intermédiaire X(t) et l'état final $X_1$. Pour chaque interaction, on détecte un ou plusieurs signaux $S_\alpha$. Chaque porteur de charge se propage à travers le détecteur selon des propriétés de transport $p(r)$ qui caractérisent le détecteur. Dans cet exemple, le détecteur est formé de CdZnTe : les porteurs de charge sont donc des électrons. De façon alternative, les porteurs de charge peuvent être des trous.

Le matériau détecteur est divisé en voxels. A chaque voxel est assigné une coordonnée (x, y, z). Chaque voxel peut résulter d'une discrétisation du volume du matériau détecteur au pas spatial de 100 $\mu$m dans chaque direction. A chaque voxel est associé au moins une propriété $p(r)$ de transport, par exemple une valeur du champ électrique $u(r)$, et/ou une probabilité de piégeage $\tau(r)$, ou une caractéristique représentative d'une variation spatiale du champ électrique, par exemple gradient ou divergence. Par exemple, à chaque voxel r est assigné une propriété $p(r)$, correspondant au couple $(u(r), \tau(r))$.

La distribution spatiale des propriétés de transport $p(r)$, dans chaque voxel, est paramétrée par des paramètres $\theta_n$, formant un vecteur de paramètres $\theta$. Selon une première approche, à chaque voxel $r$ est associé des paramètres $\theta_n(r) = p(r) = (u(r), \tau(r))$, définis pour chaque voxel. Cela suppose une définition d'une valeur des paramètres pour chaque voxel, ce qui est contraignant du point de vue taille mémoire : il y a autant de paramètres que de voxels. $n$ est un entier compris entre 1 et $N$, $N$ correspondant au nombre de paramètres déterminés.

Selon une autre approche, la distribution spatiale des paramètres $p(r)$ est paramétrée par des paramètres $\theta_n$ appliqués à une fonction spatiale $F_n(r)$ ou à une combinaison de fonctions spatiales. Par exemple, $p(r) = \Sigma_n \theta_n F_n(r)$.

Chaque fonction spatiale $F_n(r)$ peut être, par exemple, une fonction sinusoïdale ou polynômiale. Le recours à des fonctions spatiales permet de réduire le nombre de paramètres $\theta_n$ du vecteur de paramètres $\theta$.

Pour résumer, à chaque voxel est assigné au moins une propriété de transport d'un porteur de charge $p(r)$. Les paramètres $\theta_n$ permettent de définir la distribution spatiale des propriétés de transport dans les voxels du détecteur.

Le vecteur de paramètres d'un détecteur est inconnu, en particulier du fait de la présence de défauts dans le matériau détecteur, distribués de façon aléatoire, qui influent sur le transport des charges entre les interactions et les électrodes qui collectent les porteurs de charges, i-e les anodes dans le cas d'électrons. Il en constitue une signature, conditionnant la réponse du détecteur. Pour chaque détecteur, les valeurs de chaque sont considérées comme stable dans le temps.

Le vecteur de paramètres $\theta$ permet d'établir une fonction d'évolution $f_\theta$ permettant de suivre l'état du nuage de porteurs de charges générés par l'interaction, de l'état initial jusqu'à l'état final, et cela pour chaque interaction.

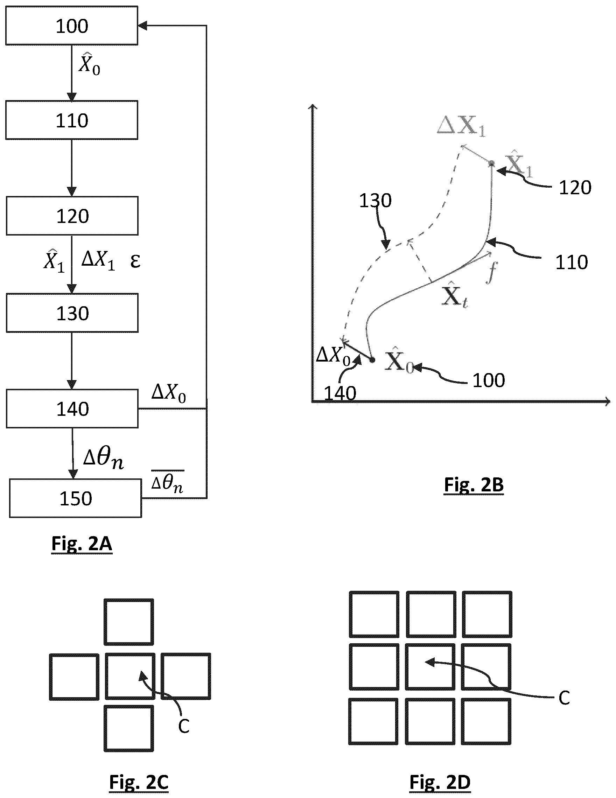

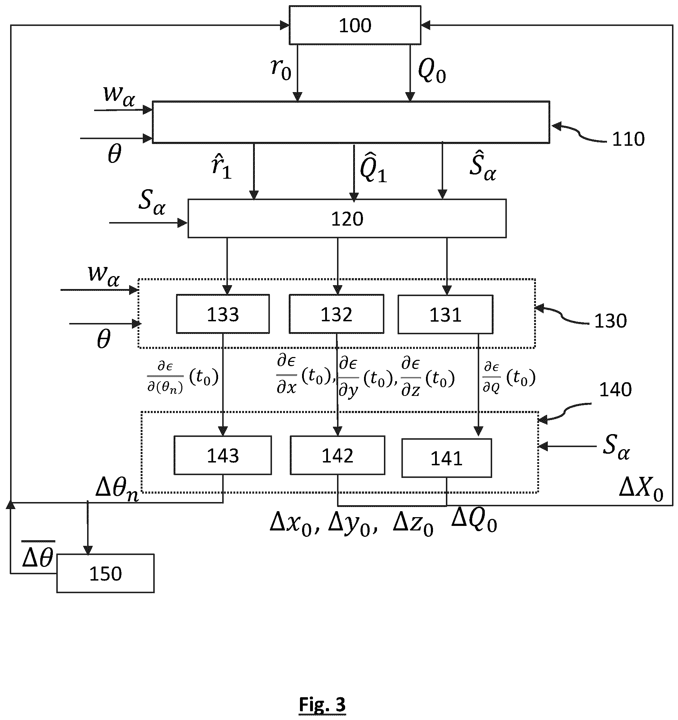

Le circuit de lecture 5 est relié à une unité de traitement 6, configurée pour déterminer le jeu de paramètres, à partir de signaux $S_\alpha$ respectivement mesurés au cours de chaque interaction, en mettant en oeuvre les étapes décrites en lien avec le figures 2A et 3. L'unité de traitement 6 comporte notamment un ou plusieurs microprocesseurs, programmés pour mettre en oeuvre les étapes décrites par la suite.

Les figures 2A résume les principales étapes d'un procédé visant à apprendre le jeu de paramètres θ régissant les propriétés de transport $p(r)$ du détecteur. Le détecteur est exposé à une source d'irradiation, dont l'énergie d'émission ou les énergies d'émission sont connues. Sous l'effet de l'irradiation, des interactions surviennent dans le matériau détecteur 2. Lors de chaque interaction, un signal de détection $S_\alpha$ est mesuré par des anodes. L'indice $\alpha$ désigne chaque anode détectant un signal exploitable. Le signal $S_\alpha$ et un vecteur formé par chaque signal de détection formés par une seule anode ou plusieurs anodes adjacentes, par exemple :

- quatre anodes : il s'agit des 4 anodes les plus proches de la position du nuages d'électrons lorsque ce dernier atteint les anodes ;
- cinq anodes : quatre électrodes autour de l'anode C ayant collectée la quantité la plus élevée de charges, cette dernière étant l'anode collectante ;
- neuf anodes : 8 anodes autour de l'anode collectante.

Au cours de l'irradiation, on recueille les signaux de détection $S_\alpha$ mesurés au cours de l'irradiation. Chaque signal mesuré $S_\alpha$ correspond à une interaction détectée. Les étapes itératives 100 à 150 sont mises en oeuvre pour chaque interaction détectée. Chaque interaction s'étend entre l'instant initial $t_0$ (survenue de l'interaction) et l'instant final $t_1$ (collecte des charges par les anodes) précédemment définis.

Etape 100 : initialisation : on estime une valeur initialisée de l'état initial $\hat{X}_0$ pour chaque interaction. La position de l'interaction peut être définie aléatoirement. L'énergie déposée $Q_0$ peut être déterminée aléatoirement, ou en fonction d'une énergie maximale définie en fonction de la nature de la source d'irradiation.

Etape 110 : Au cours de cette étape, on propage l'état résultant de l'étape 100 ou d'une itération précédente. Cette étape est mise en oeuvre en utilisant une fonction d'évolution $f_\theta$, décrite par la suite, et paramétrée du vecteur de paramètres θ. La fonction d'évolution est décrite par une équation différentielle de type :

$$\frac{d(X(t))}{dt} = f_\theta(X(t), t) \quad (1)$$

Ainsi,

$$\hat{X}_1 = \hat{X}_0 + \int_{t0}^{t1} f_\theta(X(t)) dt \quad (2)$$

L'intégrale de l'expression (2) peut être calculée numériquement, de proche en proche, par exemple selon une méthode de Runge-Kutta.

Etape 120 : estimation de l'état final $\hat{X}_1$ et calcul d'une erreur : au cours de cette étape, on détermine une fonction d'erreur entre l'état final estimé $\hat{X}_1$ et l'état final mesuré $\hat{X}_1$. Dans l'état final mesuré, on dispose d'une estimation de chaque signal mesuré au niveau des électrodes, ainsi que d'une mesure de ce signal.

$$\varepsilon = \left\| \widehat{S_\alpha} - S_\alpha \right\|^2 (3) :$$

norme de l'erreur.
et

$$\Delta S_\alpha = \hat{S}_\alpha - S_\alpha \quad (3') :$$

il s'agit de l'écart sur l'observation.

D'autres expressions de la norme de l'erreur peuvent être envisagée.

Etape 130 : Rétropropagation. A partir de l'écart $\Delta X_1$, on met en oeuvre un algorithme d'apprentissage profond de type N-ODE, tel que précédemment cité, pour obtenir une erreur $\Delta X_0$ quant à l'état initial $\hat{X}_0$ pris en compte lors de l'étape 100, et mettre à jour ce dernier. Cette phase, dite de rétropropagation, implique un calcul de gradients de l'erreur par rapport à chaque composante du vecteur de paramètres, ainsi que par rapport aux composantes du vecteur d'état (composantes spatiales $x$, $y$ et $z$, charges $Q$, signal ou signaux $S_\alpha$). La rétropropagation est effectuée de l'état final (instant $t_1$) vers l'état initial (instant $t_0$), sachant que ces instants sont connus.

Etape 140 : Calcul d'écart.

Au cours de cette étape, on calcul, pour chaque interaction, un écart $\Delta X_0$ à appliquer à l'état initial, en tant que terme de correction, de façon à minimiser progressivement l'erreur $\varepsilon$. On détermine également un écart $\Delta\theta_n$ pour chaque terme du vecteur de paramètres. Les étapes 100 à 140 sont ensuite réitérées jusqu'à un critère d'arrêt d'itérations par exemple un nombre d'itérations prédéterminé ou une valeur seuil de la fonction d'erreur en dessous de laquelle on considère que le vecteur de paramètres décrit suffisamment bien le comportement du détecteur.

Etape 150 : Prise en compte de différentes interactions.

Au cours de cette étape, on prend en compte les paramètres $\theta_n$ déterminés pour différentes interactions pour estimer un vecteur de paramètres moyen $\overline{\theta_n}$, ou une autre fonction statistique, de façon à permettre une correction du vecteur de paramètres en prenant un grand nombre d'interactions.

La figure 2B illustre les principales étapes du procédé.

On décrit à présent dans le détail les étapes 110 et 130, qui sont les bases du procédé. L'étape 110 est une phase de propagation, visant à estimer l'état $\hat{X}_1$ à partir d'un état estimé $\hat{X}_0$ par intégration successive de la fonction d'évolution $f_\theta$ selon des pas temporels prédéterminés.

A l'état initial :

$$\hat{X}_0 = \left(\hat{Q}_0, \hat{x}_0, \hat{y}_0, \hat{z}_0, S_{\alpha,0}\right)(4)$$

A l'état final :

$$\hat{X}_1 = (\hat{Q}_1, \hat{x}_1, \hat{y}_1, \hat{z}_1, \hat{S}_{\alpha,1} = \hat{S}_\alpha) \ (5)$$

Parmi les hypothèses de modélisations, on considère que :

- la distribution spatiale des électrons dans le volume du matériau détecteur suit une distribution gaussienne sphérique dont l'élargissement est dû à la diffusion et à la répulsion coulombienne. L'évolution temporelle de la variance de cette distribution est connue., comme décrit dans la publication G. Montemont, S. Lux, O. Monnet, S. Stanchina, et L. Verger, « Studying Spatial Resolution of CZT Detectors Using Sub-Pixel Positioning for SPECT », IEEE Transactions on Nuclear Science, vol. 61, n° 5, p. 2559-2566, oct. 2014, et plus précisément en lien avec la figure 2 de cette publication
- chaque photon primaire va générer un certain nombre d'électrons secondaires dépendant de son énergie, qui peuvent eux-mêmes générer des photons secondaires et ainsi de suite. On peut alors schématiser l'interaction d'un photon comme étant une suite de dépôts très localisés séparés par une grande distance. Chacune de ces positions de dépôt vont générer un nuage électronique qui va s'étendre sous l'effet de la diffusion thermique et de la répulsion coulombienne.

La fonction d'évolution est telle que :

$$f_\theta = \frac{d}{dt}\begin{cases} Q \\ \vec{r} \\ S_\alpha \end{cases} = \begin{cases} \frac{-Q}{\tau} \\ \vec{u} \\ Q(\vec{w}^\alpha \cdot \vec{u}) \end{cases} = \begin{cases} \frac{-Q}{\tau} \\ u^i \\ \sum_i Q w_i^\alpha u^i \end{cases} \ (6)$$

Où :

- $\vec{r}$ est la position du centroïde du nuage de porteurs. Il dépend du temps $\vec{r} = \vec{r}(t)$ . les différents termes $\vec{r}(t)$ représentent une trajectoire du nuage de porteurs de charge.
- $\vec{u} = \mu\vec{E}$ correspond à la vitesse des électrons dans le matériau détecteur et $\vec{E}$ est le champ électrique ; $\vec{u}$ et $\vec{E}$ sont des données voxelisées : $\vec{u} = \vec{u}(\vec{r})$ ; $\vec{E} = \vec{E}(\vec{r})$ ;
- $\tau$ est la durée de vie des électrons dans le matériau détecteur : il s'agit d'une grandeur distribuée spatialement dans le détecteur donc $\tau = \tau(\vec{r})$ ;
- $Q$ est la charge totale du nuage électronique : il s'agit de l'intégrale de charge du nuage de porteurs de charges à un temps t, $Q = Q(t)$. Cette charge évolue en fonction du piégeage des porteurs.
- $S_\alpha$ est le signal de chaque anode de rang $\alpha$ ;
- $i$ = indice des corodonnées spatiales : $i$ = 1, 2 et 3 correspond respectivement aux coordonnées spatiales x, y et z ;
- $\vec{w}$ est le champ de pondération du détecteur, qui correspond au gradient du potentiel de pondération. $\vec{w}$ est discrétisé au niveau de chaque anode, à chaque anode correspondant un vecteur $w_\alpha$ dont les valeurs $w_\alpha(\vec{r})$ sont définies pour chaque voxel du détecteur. Sur la figure 1, on a schématisé le champ de pondération d'une anode. Chaque courbe en pointillés correspond à des valeurs identiques du champ de pondération.

Le potentiel de pondération sert à calculer le signal collecté, par une anode, sous l'effet d'une charge en mouvement dans le matériau détecteur. Le potentiel de pondération n'a pas d'unité physique et représente l'influence qu'a une anode sur l'induction de signal en fonction de la distance à laquelle se trouve la particule chargée en mouvement. Le potentiel de pondération est significatif à proximité de chaque anode : à proximité de chaque anode, les électrons sont soumis au potentiel de pondération, par lequel un signal de détection est formé sous l'effet du déplacement des électrons. Le potentiel de pondération est considéré comme invariant d'une anode à une autre anode : il dépend de la taille de chaque anode, de l'espace entre deux anodes adjacentes et de l'épaisseur et de la permittivité du matériau détecteur.

Le gradient spatial du potentiel de pondération forme un champ de pondération au voisinage d'une anode. La valeur du courant collecté à l'anode dépend du produit scalaire du champ de pondération et du champ électrique s'étendant à travers le matériau détecteur.

Ainsi, à un instant t, lorsque le nuage d'électrons s'étend selon une coordonnée $\vec{r}(t) = (x, y, z)$ dans le détecteur, il induit, sur chaque anode $\alpha$, un signal $S_\alpha(t)$ tel que :

$$\frac{dS_\alpha(t)}{dt} = Q(t)\vec{u}(\vec{r}) \cdot \vec{w}_\alpha(\vec{r})dt$$

L'équation (6) correspond à l'équation de transport temporelle, permettant de simuler la dérive du nuage d'électrons dans le détecteur, de façon à estimer $\hat{X}_1$ à partir de $\hat{X}_0$. $f_\theta$ est la fonction d'évolution temporelle (ou fonction de propagation). La dérive du nuage d'électrons est obtenue par incréments temporels prédéterminés, par exemple 1 ns ou quelques ns, sachant que compte tenu des dimensions usuelles d'un détecteur, la durée de la propagation entre l'interaction et la détection est de quelques dizaines de $\mu$s

L'étape de propagation consiste à une intégration numérique, de proche en proche de type :

$$\hat{X}(T + dt) = \hat{X}(T) + \int_T^{T+dt} f_\theta(t)\, dt \,(9)$$

On peut ainsi estimer l'évolution de l'état du nuage électronique entre les instants initiaux et finaux $t_0$ et $t_1$, sachant que ces derniers sont connus. L'intégration peut par exemple mettre en oeuvre une méthode d'intégration de Runge-Kutta.

Cela permet d'obtenir une estimation de $\hat{X}(t_1) = \widehat{X_1}$

- une estimation de la position $\hat{r}_1$.
- une estimation de la charge $\hat{Q}_1$.

- une estimation du signal de détection détecté $\widehat{S_\alpha}$, sachant que Le signal de détection mesuré $S_\alpha$ est connu.

Rétropropagation

La rétropropagation fait l'objet des sous-étapes 131 à 133 de l'étape 130.

L'étape 130 correspond à une rétropropagation du terme $X^* = \frac{\partial \epsilon}{\partial X}$, pour chaque interaction, entre l'état final ($X = X_1$), résultant des mesures de $S_\alpha$, et l'état initial ($X = X_0$). Il s'agit d'effectuer une rétropropagation, de proche en proche des erreurs $r^* = \frac{\partial \epsilon}{\partial r}$, $Q^* = \frac{\partial \epsilon}{\partial Q}$ et $\theta^* = \frac{\partial \epsilon}{\partial \theta}$ relatives la position du nuage d'électrons et de la charge respectivement, entre $r = r_1$, $r = r_0$ et $Q = Q_1$, $Q = Q_0$ respectivement. La rétropropagation de la charge $Q^*$, est effectuée selon l'expression (20)

La rétropropagation de l'erreur $r^*$, est effectuée selon les expressions (30) à (32).

La rétropropagation de l'erreur $\theta^*$ relativement au vecteur de paramètres est effectuée selon l'expression (40).

On pose

$$\hat{X}(T - dt) = \hat{X}(T) - \int_{T-dt}^{T} f_\theta(t)\, dt$$

D'une façon générale, si

$$X^* = \frac{\partial \epsilon}{\partial X}, \text{ avec } \epsilon = \|\Delta X\|^2$$

$$\dot{X^*} = \frac{d}{dt}\begin{Bmatrix}\frac{\partial \epsilon}{\partial Q}\\\frac{\partial \epsilon}{\partial r}\\\frac{\partial \epsilon}{\partial \theta}\end{Bmatrix} = \frac{d}{dt}\begin{Bmatrix}Q^*\\\vec{r}^*\\\theta^*\end{Bmatrix} = \begin{bmatrix}\frac{-1}{\tau} & 0 & 0 & 0 & \vec{u}.\overrightarrow{w^1} & \vec{u}.\overrightarrow{w^2} & \vec{u}.\overrightarrow{w^3} & \vec{u}.\overrightarrow{w^4}\\ 0 & \frac{\partial u_x}{\partial x} & \frac{\partial u_y}{\partial x} & \frac{\partial u_z}{\partial x} & Q\frac{\partial(\vec{u}.\overrightarrow{w^1})}{\partial x} & Q\frac{\partial(\vec{u}.\overrightarrow{w^2})}{\partial x} & Q\frac{\partial(\vec{u}.\overrightarrow{w^3})}{\partial x} & Q\frac{\partial(\vec{u}.\overrightarrow{w^4})}{\partial x}\\ 0 & \frac{\partial u_x}{\partial y} & \frac{\partial u_y}{\partial y} & \frac{\partial u_z}{\partial y} & Q\frac{\partial(\vec{u}.\overrightarrow{w^1})}{\partial y} & Q\frac{\partial(\vec{u}.\overrightarrow{w^2})}{\partial y} & Q\frac{\partial(\vec{u}.\overrightarrow{w^3})}{\partial y} & Q\frac{\partial(\vec{u}.\overrightarrow{w^4})}{\partial y}\\ 0 & \frac{\partial u_z}{\partial z} & \frac{\partial u_y}{\partial z} & \frac{\partial u_z}{\partial z} & Q\frac{\partial(\vec{u}.\overrightarrow{w^1})}{\partial z} & Q\frac{\partial(\vec{u}.\overrightarrow{w^2})}{\partial z} & Q\frac{\partial(\vec{u}.\overrightarrow{w^3})}{\partial z} & Q\frac{\partial(\vec{u}.\overrightarrow{w^4})}{\partial z}\\ \frac{Q\partial\tau}{\tau^2\partial\theta_1} & \frac{\partial u_x}{\partial\theta_1} & \frac{\partial u_y}{\partial\theta_1} & \frac{\partial u_z}{\partial\theta_1} & Q\frac{\partial\vec{u}}{\partial\theta_1}\cdot\overrightarrow{w^1} & Q\frac{\partial\vec{u}}{\partial\theta_1}\cdot\overrightarrow{w^2} & Q\frac{\partial\vec{u}}{\partial\theta_1}\cdot\overrightarrow{w^3} & Q\frac{\partial\vec{u}}{\partial\theta_1}\cdot\overrightarrow{w^4}\\ \vdots & \vdots & \vdots & \vdots & \vdots & \vdots & \vdots & \vdots\\ \frac{Q\partial\tau}{\tau^2\partial\theta_N} & \frac{\partial u_x}{\partial\theta_N} & \frac{\partial u_y}{\partial\theta_N} & \frac{\partial u_z}{\partial\theta_N} & Q\frac{\partial\vec{u}}{\partial\theta_N}\cdot\overrightarrow{w^1} & Q\frac{\partial\vec{u}}{\partial\theta_N}\cdot\overrightarrow{w^2} & Q\frac{\partial\vec{u}}{\partial\theta_N}\cdot\overrightarrow{w^3} & Q\frac{\partial\vec{u}}{\partial\theta_N}\cdot\overrightarrow{w^4}\end{bmatrix} \times \begin{Bmatrix}\frac{\partial\epsilon}{\partial Q}\\\frac{\partial\epsilon}{\partial x}\\\frac{\partial\epsilon}{\partial y}\\\frac{\partial\epsilon}{\partial z}\\\frac{\partial\epsilon}{\partial S_\alpha}\end{Bmatrix} \quad (10)$$

L'expression (10) est une fonction de propagation dite adjointe de la fonction d'évolution. La rétropropagation consiste à rétropropager les erreurs , respectivement explicitées selon les expressions suivantes :

Evolution de la charge du nuage électronique : (sous-étape 131)

$$-\frac{d}{dt}\left(\frac{\partial\epsilon}{\partial Q}\right) = -\frac{1}{\tau}\frac{\partial\epsilon}{\partial Q} + \sum_\alpha \frac{\partial\epsilon}{\partial S_\alpha}(\vec{u}.\overrightarrow{w^\alpha}) \quad (20)$$

Position du nuage électronique (sous étape 132)

$$-\frac{d}{dt}\left(\frac{\partial\epsilon}{\partial x}\right) = \left(\frac{\partial u_x}{\partial x}\cdot\frac{\partial\epsilon}{\partial x} + \frac{\partial u_y}{\partial x}\cdot\frac{\partial\epsilon}{\partial y} + \frac{\partial u_z}{\partial x}\cdot\frac{\partial\epsilon}{\partial z}\right) + Q\sum_\alpha \frac{\partial(\vec{u}.\overrightarrow{w^\alpha})}{\partial x}\cdot\frac{\partial\epsilon}{\partial S_\alpha} \quad (30)$$

$$-\frac{d}{dt}\left(\frac{\partial\epsilon}{\partial y}\right) = \left(\frac{\partial u_x}{\partial y}\cdot\frac{\partial\epsilon}{\partial x} + \frac{\partial u_y}{\partial y}\cdot\frac{\partial\epsilon}{\partial y} + \frac{\partial u_z}{\partial y}\cdot\frac{\partial\epsilon}{\partial z}\right) + Q\sum_\alpha \frac{\partial(\vec{u}.\overrightarrow{w^\alpha})}{\partial y}\cdot\frac{\partial\epsilon}{\partial S_\alpha} \quad (31)$$

$$-\frac{d}{dt}\left(\frac{\partial\epsilon}{\partial z}\right) = \left(\frac{\partial u_x}{\partial z}\cdot\frac{\partial\epsilon}{\partial x} + \frac{\partial u_y}{\partial z}\cdot\frac{\partial\epsilon}{\partial y} + \frac{\partial u_z}{\partial z}\cdot\frac{\partial\epsilon}{\partial z}\right) + Q\sum_\alpha \frac{\partial(\vec{u}.\overrightarrow{w^\alpha})}{\partial z}\cdot\frac{\partial\epsilon}{\partial S_\alpha} \quad (32)$$

Vecteur de paramètres (sous-étape 133)

$$-\frac{d}{dt}\left(\frac{\partial\epsilon}{\partial\theta_n}\right) = \left(\frac{\partial u_x}{\partial\theta_n}\cdot\frac{\partial\epsilon}{\partial x} + \frac{\partial u_y}{\partial\theta_n}\cdot\frac{\partial\epsilon}{\partial y} + \frac{\partial u_z}{\partial\theta_n}\cdot\frac{\partial\epsilon}{\partial z} + Q\sum_\alpha \frac{\partial\epsilon}{\partial S^\alpha}\frac{\partial\vec{u}}{\partial\theta_n}\cdot\overrightarrow{w^\alpha}\right) + \frac{\partial\epsilon}{\partial Q}\frac{Q\partial\tau}{\tau^2\partial\theta_n} \quad (40)$$

Les sous-étapes 131 à 133 sont mises en oeuvre par intégration successive, selon des pas temporels dt tels que décrits en lien avec l'étape de propagation, selon les expressions :

$$\frac{\partial\epsilon}{\partial Q}(T - dt) = \frac{\partial\epsilon}{\partial Q}(T) - \int_{T-dt}^{T}\left(-\frac{1}{\tau(r)}\frac{\partial\epsilon}{\partial Q} + \sum_\alpha \frac{\partial\epsilon}{\partial S_\alpha}(\overrightarrow{u(r)}.\overrightarrow{w^\alpha(r)})\right)dt \quad (21)$$

$$\frac{\partial\epsilon}{\partial x}(T - dt) = \frac{\partial\epsilon}{\partial x}(T) - \int_{T-dt}^{T}\left(\frac{\partial u_x}{\partial x}\cdot\frac{\partial\epsilon}{\partial x} + \frac{\partial u_y}{\partial x}\cdot\frac{\partial\epsilon}{\partial y} + \frac{\partial u_z}{\partial x}\cdot\frac{\partial\epsilon}{\partial z}\right) + Q\sum_\alpha \frac{\partial(\vec{u}.\overrightarrow{w^\alpha})}{\partial x}\frac{\partial\epsilon}{\partial S_\alpha}dt \quad (33)$$

$$\frac{\partial\epsilon}{\partial y}(T - dt) = \frac{\partial\epsilon}{\partial y}(T) - \int_{T-dt}^{T}\left(\frac{\partial u_x}{\partial y}\cdot\frac{\partial\epsilon}{\partial x} + \frac{\partial u_y}{\partial y}\cdot\frac{\partial\epsilon}{\partial y} + \frac{\partial u_z}{\partial y}\cdot\frac{\partial\epsilon}{\partial z}\right) + Q\sum_\alpha \frac{\partial(\vec{u}.\overrightarrow{w^\alpha})}{\partial y}\frac{\partial\epsilon}{\partial S_\alpha}dt \quad (34)$$

$$\frac{\partial \epsilon}{\partial z}(T - dt) = \frac{\partial \epsilon}{\partial z}(T) - \int_{T-dt}^{T}\left(\frac{\partial u_x}{\partial z} \cdot \frac{\partial \epsilon}{\partial x} + \frac{\partial u_y}{\partial z} \cdot \frac{\partial \epsilon}{\partial y} + \frac{\partial u_z}{\partial z} \cdot \frac{\partial \epsilon}{\partial z}\right) + Q\sum_\alpha \frac{\partial(\vec{u}.\overrightarrow{w^\alpha})}{\partial z}\frac{\partial \epsilon}{\partial S_\alpha}dt \quad (35)$$

$$\frac{\partial \epsilon}{\partial \theta_n}(T - dt) = \frac{\partial \epsilon}{\partial \theta_n}(T) - \int_{T-dt}^{T}\left(\frac{\partial u_x}{\partial \theta_n} \cdot \frac{\partial \epsilon}{\partial x} + \frac{\partial u_y}{\partial \theta_n} \cdot \frac{\partial \epsilon}{\partial y} + \frac{\partial u_z}{\partial \theta_n} \cdot \frac{\partial \epsilon}{\partial z} + Q\sum_\alpha \frac{\partial \epsilon}{\partial S^\alpha}\frac{\partial \vec{u}}{\partial \theta_n} \cdot \overrightarrow{w^\alpha} + \frac{\partial \epsilon}{\partial Q}\frac{Q\partial \tau}{\tau^2 \partial \theta_n}\right) dt \quad (41)$$

On connaît

$$\Delta S_\alpha = \hat{S}_\alpha - S_\alpha = \frac{\partial \epsilon}{\partial S_\alpha}.$$

Les expressions (21), (33), (34), (35) et (41) permettent une rétropropagation entre les instants $t_1$ et $t_0$, qui sont connus car définis au cours de la propagation. Ces expressions peuvent être combinées avec :

$$\frac{\partial \epsilon}{\partial Q} = \sum_\alpha \frac{\partial \epsilon}{\partial S_\alpha}\frac{\partial S_\alpha}{\partial Q} = \sum_\alpha \Delta S_\alpha \frac{\partial S_\alpha}{\partial Q} \quad (22)$$

$$\frac{\partial \epsilon}{\partial x} = \sum_\alpha \frac{\partial \epsilon}{\partial S_\alpha}\frac{\partial S_\alpha}{\partial x} = \sum_\alpha \Delta S_\alpha \frac{\partial S_\alpha}{\partial x} \quad (36)$$

$$\frac{\partial \epsilon}{\partial y} = \sum_\alpha \frac{\partial \epsilon}{\partial S_\alpha}\frac{\partial S_\alpha}{\partial y} = \sum_\alpha \Delta S_\alpha \frac{\partial S_\alpha}{\partial y} \quad (37)$$

$$\frac{\partial \epsilon}{\partial z} = \sum_\alpha \frac{\partial \epsilon}{\partial S_\alpha}\frac{\partial S_\alpha}{\partial z} = \sum_\alpha \Delta S_\alpha \frac{\partial S_\alpha}{\partial z} \quad (38)$$

$$\frac{\partial \epsilon}{\partial \theta_n} = \sum_\alpha \Delta S_\alpha \frac{\partial S_\alpha}{\partial \theta_n} = \Delta S_\alpha \frac{\partial S_\alpha}{\partial \theta_n} \quad (42)$$

On obtient ainsi des expressions permettant d'effectuer les rétro propagations, exprimant la dépendance des signaux $S_\alpha$ aux différents paramètres : ceux de l'événement Q,x,y,z et ceux du détecteur θ:

Evolution de la charge du nuage électronique :

$$-\frac{\partial \dot{S^\alpha}}{\partial Q} = -\frac{1}{\tau}\frac{\partial S^\alpha}{\partial Q} + \vec{u}.\overrightarrow{w^\alpha} \quad (23)$$

Position du nuage électronique

$$-\frac{\partial \dot{S^\alpha}}{\partial x} = \left(\frac{\partial u_x}{\partial x} \cdot \frac{\partial S^\alpha}{\partial x} + \frac{\partial u_y}{\partial x} \cdot \frac{\partial S^\alpha}{\partial y} + \frac{\partial u_z}{\partial x} \cdot \frac{\partial S^\alpha}{\partial z}\right) + Q\frac{\partial(\vec{u}.\overrightarrow{w^\alpha})}{\partial x} \quad (39)$$

$$-\frac{\partial \dot{S^\alpha}}{\partial y} = \left(\frac{\partial u_x}{\partial y} \cdot \frac{\partial S^\alpha}{\partial x} + \frac{\partial u_y}{\partial y} \cdot \frac{\partial S^\alpha}{\partial y} + \frac{\partial u_z}{\partial y} \cdot \frac{\partial S^\alpha}{\partial z}\right) + Q\frac{\partial(\vec{u}.\overrightarrow{w^\alpha})}{\partial x} \quad (39')$$

$$-\frac{\partial \dot{S^\alpha}}{\partial z} = \left(\frac{\partial u_x}{\partial z} \cdot \frac{\partial S^\alpha}{\partial x} + \frac{\partial u_y}{\partial z} \cdot \frac{\partial S^\alpha}{\partial y} + \frac{\partial u_z}{\partial z} \cdot \frac{\partial S^\alpha}{\partial z}\right) + Q\frac{\partial(\vec{u}.\overrightarrow{w^\alpha})}{\partial x} \quad (39'')$$

Vecteur de paramètres

$$-\frac{\partial \dot{S}^{\alpha}}{\partial \theta_n} = \left( \frac{\partial u_x}{\partial \theta_n} \cdot \frac{\partial S^{\alpha}}{\partial x} + \frac{\partial u_y}{\partial \theta_n} \cdot \frac{\partial S^{\alpha}}{\partial y} + \frac{\partial u_z}{\partial \theta_n} \cdot \frac{\partial S^{\alpha}}{\partial z} + Q \frac{\partial \vec{u}}{\partial \theta_n} \cdot \vec{w}^{\alpha} \right) + \frac{\partial S^{\alpha}}{\partial Q} \frac{Q \partial \tau}{\tau^2 \partial \theta_n} \ (43)$$

Etape de mise à jour

Au cours de l'étape 140, on procède à une mise à jour de l'état initial $X_0$. Cette étape consiste à déterminer des écarts $\Delta Q$ (sous-étape 141), $\Delta r$ ($\Delta r = (\Delta x, \Delta y, \Delta z)$) (sous-étape 142), $\Delta \theta$ (formé de termes de corrections $\Delta \theta_n$) (sous-étape 143) et cela pour chaque interaction.

La mise à jour peut être effectuée selon la méthode de Gauss Newton diagonale : cf expressions (50) à (54).

$$\Delta Q = \frac{\frac{\partial \epsilon}{\partial Q}(t0)}{\sum_\alpha \frac{\partial S\alpha}{\partial Q}^2} \ (50)$$

$$\Delta x = \frac{\frac{\partial \epsilon}{\partial x}(t0)}{\sum_\alpha \frac{\partial S\alpha}{\partial x}^2} \ (51)$$

$$\Delta y = \frac{\frac{\partial \epsilon}{\partial y}(t0)}{\sum_\alpha \frac{\partial S\alpha}{\partial y}^2} \ (52)$$

$$\Delta z = \frac{\frac{\partial \epsilon}{\partial z}(t0)}{\sum_\alpha \frac{\partial S\alpha}{\partial z}^2} \ (53)$$

$$\Delta \theta_n = \frac{\frac{\partial \epsilon}{\partial \theta_n}}{\sum_\alpha \frac{\partial S\alpha}{\partial \theta_n}^2} \ (54)$$

Lors de la mise à jour,

$$X_0 = X_0 + \Delta X_0 \ (60)$$

Ainsi, dans cet exemple : $x_0 \leftarrow x_0 + \Delta x$ ; $y_0 \leftarrow y_0 + \Delta y_0$ ; $z_0 \leftarrow z_0 + \Delta z_0$ ; $\theta_n \leftarrow \theta_n + \Delta \theta_n$ (61)

Au cours d'une étape 150, on prend en compte les termes de correction $\Delta \theta_n$ définis lors de la mise en oeuvre du procédé pour plusieurs interactions, typiquement plusieurs centaines, pour former un vecteur de correction moyen $\overline{\theta}$. Le vecteur de correction moyen est formé à partir d'une moyenne des paramètres $\theta_n$ définis pour les interactions.

Au cours de cette étape, on peut prendre d'autres critères qu'une moyenne des termes de correction $\theta_n$ pour former le vecteur de correction $\overline{\theta}$, par exemple une médiane.

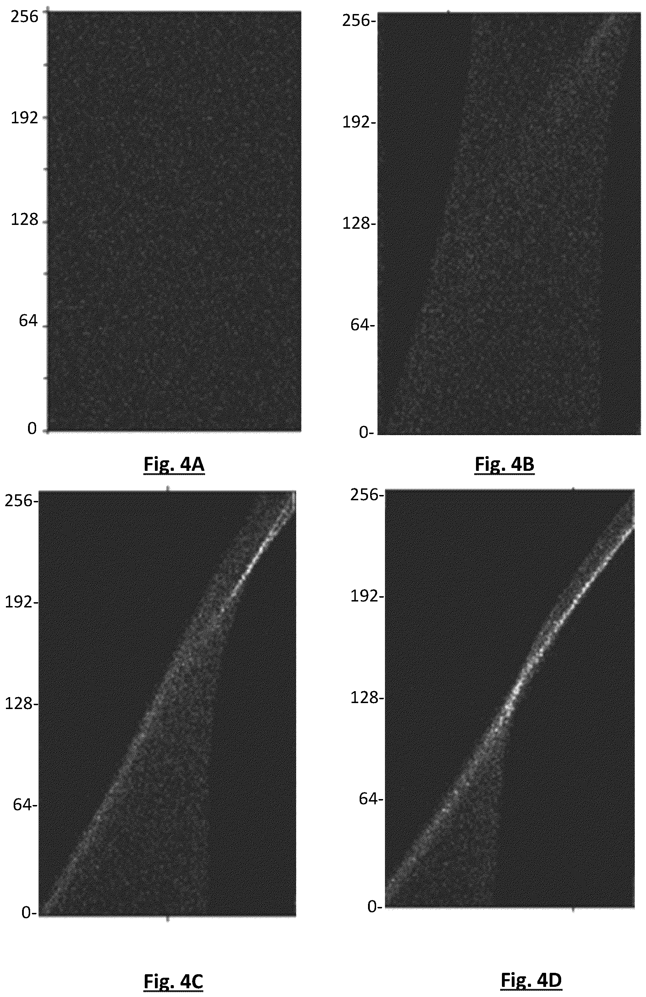

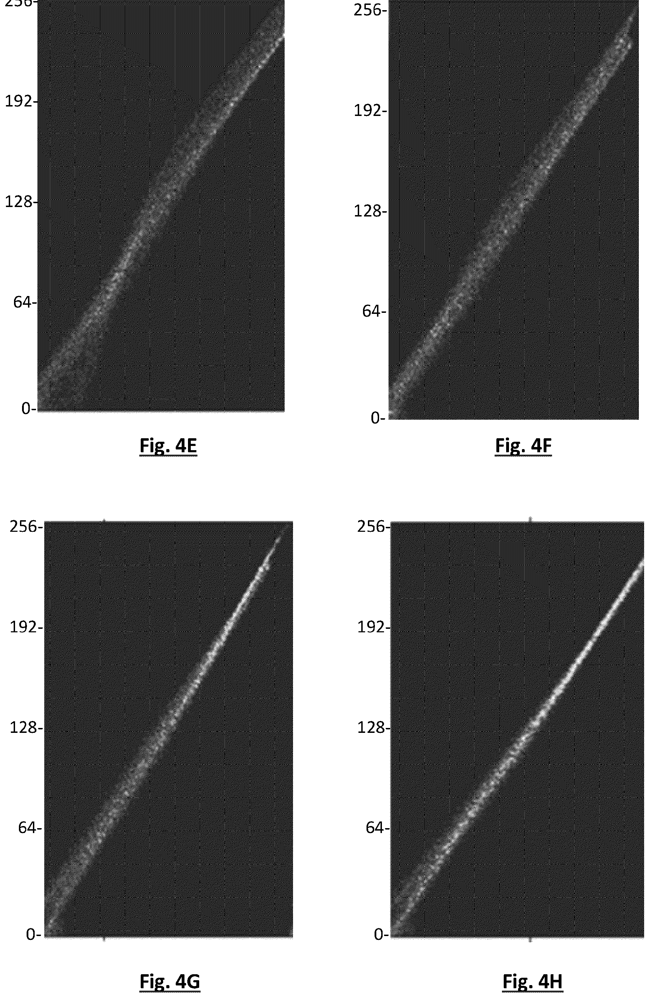

Le procédé précédemment décrit a été mis en oeuvre. Les figures 4A à 4H représentent l'estimation de la profondeur d'interaction dans le détecteur, pour différentes interactions modélisées, pour huit itérations successives respectivement. Chaque point correspond à une interaction. L'axe des abscisses correspond aux profondeurs modélisées tandis que l'axe des ordonnées correspond aux profondeurs estimées par l'algorithme. Les profondeurs initiales sont choisies aléatoirement (cf. figure 4A). On observe qu'au bout de huit itérations, les profondeurs estimées sont cohérentes avec les profondeurs modélisées

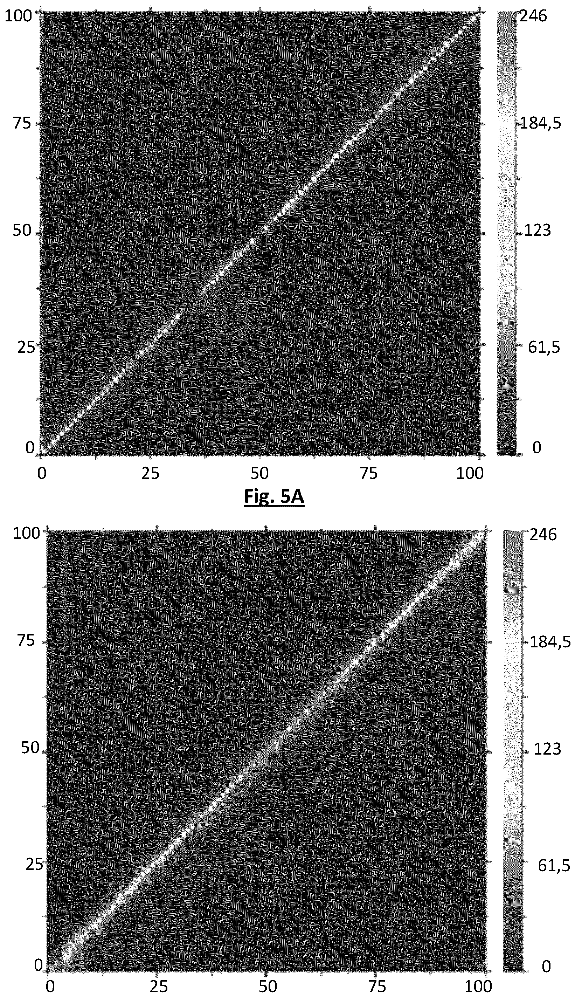

Les figures 5A et 5B représentent respectivement une estimation des positions d'interactions selon un axe X, parallèle aux anodes, et selon la profondeur (axe Z). Ces figures ont été obtenues en prenant en compte 32768 interactions de photons d'énergie 122 keV sur un détecteur comportant 2 x 2 anodes.

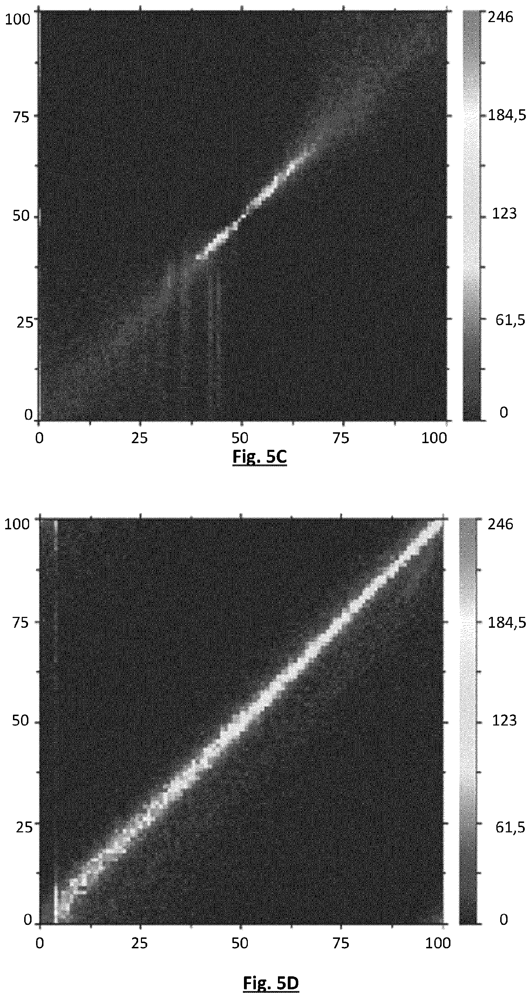

Les figures 5C et 5D sont équivalentes aux figures 5A et 5B, mais avec une prise en compte d'un bruit réaliste à l'énergie 122 keV.

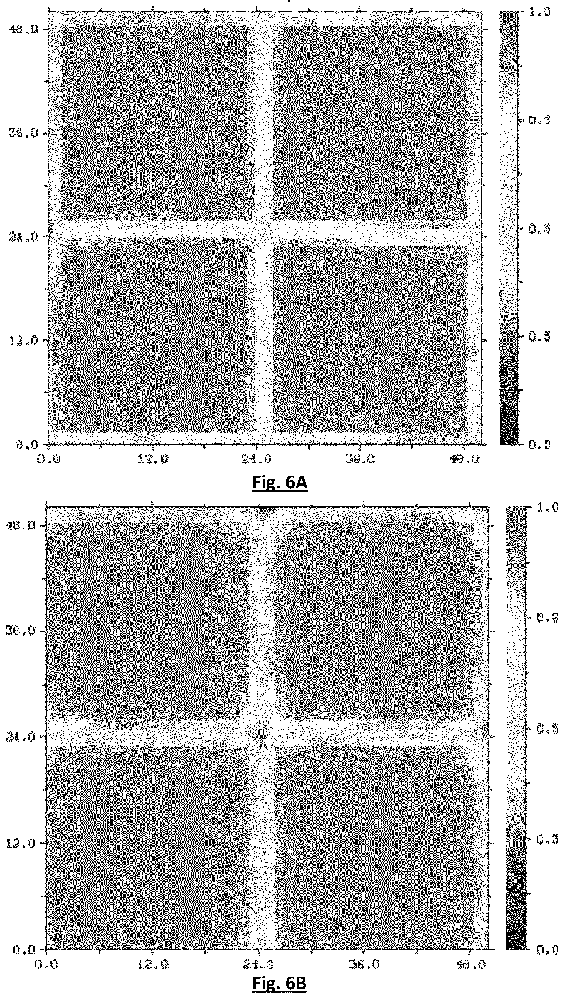

Au cours d'une autre série d'essais, on a simulé la CIE (charge induction efficiency), qui représente le rapport, normalisé à 1, entre la charge collectée et la charge déposée par un photon au cours d'une interaction. On a pris en compte un détecteur formé de 2 x 2 anodes. La figure 6A montre une CIE mesurée en effectuant un balayage du détecteur avec un faisceau collimaté, avec un faisceau d'énergie 122 keV. La figure 6B montre une CIE simulée en mettant en oeuvre l'invention. On observe que la simulation est cohérente avec les mesures.

Le procédé permet ainsi une estimation précise de la réponse d'un détecteur.

Il est également possible d'estimer la réponse d'un détecteur en utilisant un algorithme de type réseau de neurones à apprentissage supervisé. Le recours à un tel algorithme suppose une puissance de calcul moindre que celle du procédé objet de l'invention. Cependant, un réseau de neurones suppose une phase d'apprentissage supervisé. L'invention citée en objet peut être utilisée pour effectuer un apprentissage supervisé d'un réseau de neurones, en se substituant à des essais expérimentaux fastidieux, car supposant une maîtrise de la position des interactions dans le matériau détecteur.

L'invention permet de générer des interactions à un endroit quelconque du détecteur et à estimer le signal de détection sur une ou plusieurs anodes. Elle peut donc être utilisée pour définir des jeux d'apprentissage, associant des données liées à une interaction dans le détecteur (position dans le détecteur et énergie) et les signaux induits en différentes anodes.

Le réseau de neurones peut être de type perceptron multicouches, comportant :

- en tant que couche d'entrée : au moins une caractéristique du signal de l'anode ayant collecté le signal maximal (anode collectante) et des anodes voisines de cette dernière ; On peut par exemple prendre en compte le signal maximal de l'anode collectante et le signal maximal d'anodes voisines de l'anode collectante ;
- en tant que couche de sortie : la position de l'interaction dans le détecteur, en deux ou trois dimensions, ainsi que la charge libérée au cours de l'interaction : ainsi, la couche de sortie est formée de 3 ou 4 noeuds.

Entre la couche d'entrée et la couche de sortie, le réseau de neurones peut comporter par exemple 3 couches interconnectées, avec 16 noeuds par couche. Un tel réseau de neurones permet une modélisation correcte d'un détecteur

La couche d'entrée comporte avantageusement, pour chaque anode, une caractéristique normalisée par la même caractéristique de l'anode ayant collecté le signal maximal. La caractéristique peut être une amplitude maximale ou une amplitude d'un signal transitoire. Dans ce cas, la couche de sortie est multipliée par le terme de normalisation de façon à estimer l'énergie. Un exemple de réseau de neurones est par exemple décrit dans Yang et al « Joint extimation of interaction position and energy déposition in semiconductor SPECT imaging sensors using fully connected neural network ». Dans cette publication, le réseau de neurones fait l'objet d'un apprentissage supervisé, à l'aide de données expérimentales.

Un tel réseau de neurones peut aisément être codé sur dans une carte électronique compacte, de type FPGA (Field Programmated Gated Array). L'avantage est d'utiliser un réseau de neurones relativement simple pour modéliser la réponse du détecteur, dont l'implémentation ne nécessite pas de composant complexe. L'apprentissage du réseau de neurones est réalisé simplement, en particulier par simulations, à l'aide du procédé tel que précédemment décrit.

Bien que décrite en lien avec un détecteur de photons X ou gamma, l'invention peut s'appliquer à d'autres types de rayonnements ionisants par exemple $\alpha$, $\beta$- ou neutrons.

**Revendications**

1. Procédé d'estimation d'un signal mesuré en un pixel d'un détecteur (1), le détecteur comportant plusieurs électrodes ($4_\alpha$), formant des pixels, reliées à un matériau détecteur (2), le matériau détecteur étant un semi-conducteur, chaque électrode étant configurée pour collecter des porteurs de charge se déplaçant, à travers le matériau détecteur, sous l'effet d'un champ électrique, suite à une interaction d'un rayonnement ionisant dans le matériau détecteur, le procédé comportant :

   - irradiation du détecteur avec des photons X ou gamma, de façon à générer des interactions dans le matériau détecteur, chaque interaction formant un signal de détection ($S_\alpha$) mesuré par au moins une électrode;
   - pour différentes interactions détectées, association d'un vecteur d'état ($X$), comportant au moins une position ($x$, $y$, $z$), une charge ($Q$), et le signal de détection ($S_\alpha$), le vecteur d'état passant d'un état initial ($X_0$) lors de la survenue de l'interaction, à un état final ($X_1$), lors de la collecte des électrons, générés par l'interaction, par au moins une électrode ;
   le procédé étant **caractérisé en ce qu'**il comporte, pour chaque interaction détectée :

      - (i) initialisation du vecteur d'état initial ($\hat{X}_0$) ;
      - (ii) à partir du vecteur d'état initial, ou d'un état initial résultant d'une itération précédente, mise en oeuvre d'un modèle de propagation des porteurs de charges dans le matériau semi-conducteur, pour estimer le vecteur d'état final ($\hat{X}_1$), le modèle de propagation étant basé sur un vecteur de paramètres ($\theta$), paramétrisant au moins une propriété de transport ($p(r)$, $u(r)$, $\tau(r)$) des porteurs de charge à travers le matériau détecteur, vers les électrodes ;

- (iii) calcul d'une erreur ($\epsilon$), représentative d'un écart entre le signal de détection estimé dans le vecteur d'état final ($\hat{S}_\alpha$) et le signal de détection mesuré ($S_\alpha$) ;

- (iv) rétropropagation d'un gradient de l'erreur ($\frac{\partial \epsilon}{\partial Q}, \frac{\partial \epsilon}{\partial x}, \frac{\partial \epsilon}{\partial y}, \frac{\partial \epsilon}{\partial z}, \frac{\partial \epsilon}{\partial \theta}$) de l'état final vers l'état initial, le gradient de l'erreur étant calculé par rapport à au moins un terme du vecteur d'état, et ($\frac{\partial \epsilon}{\partial \theta}$) par rapport à plusieurs paramètres du vecteur de paramètres ;

- (v) mise à jour du vecteur d'état ($\hat{X}_0$), à l'instant initial, et du vecteur de paramètre, et réitération des étapes (ii) à (v) jusqu'à l'atteinte d'un critère d'arrêt des itérations ;

le procédé étant tel que :

- les étapes (i) à (v) sont mises en oeuvre par une unité de traitement reliée au détecteur ;
- les étapes (i) à (v) sont mises en oeuvre pour différentes interactions, de façon à mettre à jour le vecteur de paramètres à chaque mise en oeuvre des étapes (i) à (v) ;
- le vecteur de paramètres est ensuite mis à jour en combinant les vecteurs de paramètres mis à jour lors de chaque interaction.

2. Procédé selon l'une quelconque des revendications précédentes, dans lequel le matériau détecteur est discrétisé en voxels, et dans lequel le vecteur de paramètres comporte, pour chaque voxel, une propriété ($p(r)$, $u(r)$, $\tau(r)$) de transport des porteurs de charge dans le détecteur.

3. Procédé selon la revendication 2, dans lequel la propriété de transport de porteurs de charges comporte :

- une valeur du champ électrique ;
- et/ou un gradient du champ électrique selon au moins une direction ;
- et/ou une valeur d'une divergence du champ électrique;
- et/ou une probabilité de piégeage dans le voxel.

4. Procédé selon l'une quelconque des revendications précédentes, dans lequel

- pour chaque interaction, le temps entre l'état initial et l'état final est discrétisé en pas temporels
- l'étape (ii) comporte une intégration numérique d'une fonction d'évolution ($f_\theta$), la fonction d'évolution traduisant une évolution temporelle de la position et de la charge des porteurs de charge, ainsi qu'une évolution de chaque signal de détection, l'intégration numérique étant réalisée successivement entre chaque pas temporels, entre l'état initial et l'état final.

5. Procédé selon la revendication 4, dans lequel l'étape (iv) comporte une intégration numérique d'une équation de propagation adjointe, traduisant une évolution temporelle du gradient de l'erreur, l'intégration numérique étant réalisée successivement entre chaque pas temporels, entre l'état final et l'état initial.

6. Procédé d'apprentissage d'un algorithme d'intelligence artificielle supervisé, destiné à simuler une réponse d'un détecteur (1), le détecteur comportant plusieurs électrodes, formant des pixels, reliés à un matériau semi-conducteur, chaque pixel étant configuré pour collecter des porteurs de charge se déplaçant, à travers le matériau semi-conducteur, sous l'effet d'un champ électrique, suite à un interaction d'un rayonnement ionisant dans le matériau semi-conducteur, le procédé comportant les étapes suivantes :

- a) définition d'une position d'une interaction dans le détecteur et d'une énergie libérée lors de ladite interaction ;
- b) estimation d'un signal de détection mesuré par au moins une électrode du détecteur, en mettant en oeuvre les étapes un procédé selon l'une quelconque des revendications précédentes ;
- c) réitération des étapes a) et b) de façon à former une base de données reliant, pour chaque interaction définie, le signal mesuré en au moins un pixel;
- d) utilisation de la base de données pour effectuer un apprentissage supervisé de l'algorithme d'intelligence artificielle.

7. Procédé selon la revendication 6, dans lequel l'algorithme d'intelligence artificielle est de type perceptron multicouches.

**8.** Détecteur (1), comportant plusieurs électrodes, formant des pixels, reliés à un matériau semi-conducteur (2), chaque pixel étant configuré pour collecter des porteurs de charges se déplaçant, à travers le matériau semi-conducteur, sous l'effet d'un champ électrique, suite à une interaction d'un rayonnement ionisant dans le matériau semi-conducteur, le détecteur étant relié à une unité de traitement (6), configurée pour mettre en oeuvre les étapes (i) à (v) d'un procédé selon l'une quelconque des revendications 1 à 6.

**9.** Détecteur, comportant plusieurs électrodes, formant des pixels, reliés à un matériau semi-conducteur (2), chaque pixel étant configuré pour collecter des porteurs de charges se déplaçant, à travers le matériau semi-conducteur, sous l'effet d'un champ électrique, suite à une interaction d'un rayonnement ionisant dans le matériau semi-conducteur, le détecteur étant relié à une unité de traitement (6), configurée pour estimer une énergie libérée par l'interaction et/ou une position de l'interaction, l'unité de traitement mettant en oeuvre un algorithme d'intelligence artificielle supervisé dont l'apprentissage est réalisé selon l'une quelconque des revendications 6 ou 7.

$S_\alpha$

$A_\alpha$

$X_1 = (Q_1, x_1, y_1, z_1, \hat{S}_\alpha)$

$W_\alpha$

$X(t)$

$X_0 = (Q_0, x_0, y_0, z_0, S_{\alpha,0})$

Z

Y

**Fig. 1**

**Fig. 2A**

**Fig. 2B**

**Fig. 2C**

**Fig. 2D**

$$r_0 \quad Q_0$$

$$w_\alpha$$
$$\theta$$

$$\hat{r}_1 \quad \hat{Q}_1 \quad \hat{S}_\alpha$$

$$S_\alpha$$

$$w_\alpha$$
$$\theta$$

$$\frac{\partial \epsilon}{\partial(\theta_n)}(t_0) \qquad \frac{\partial \epsilon}{\partial x}(t_0), \frac{\partial \epsilon}{\partial y}(t_0), \frac{\partial \epsilon}{\partial z}(t_0) \qquad \frac{\partial \epsilon}{\partial Q}(t_0)$$

$$S_\alpha$$

$$\Delta X_0$$

$$\Delta\theta_n$$

$$\Delta x_0, \Delta y_0, \ \Delta z_0 \quad \Delta Q_0$$

$$\overline{\Delta\theta}$$

**Fig. 3**

17

**Fig. 4A**

**Fig. 4B**

**Fig. 4C**

**Fig. 4D**

**Fig. 4E**

**Fig. 4F**

**Fig. 4G**

**Fig. 4H**

**Fig. 5A**

**Fig. 5C**

**Fig. 5D**

Fig. 6A

Fig. 6B

Europäisches
Patentamt

European
Patent Office

Office européen
des brevets

# RAPPORT DE RECHERCHE EUROPEENNE

Numéro de la demande

EP 24 22 1956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/133589 A1 (BANERJEE SRUTARSHI [US] ET AL) 6 mai 2021 (2021-05-06) | 1,2,6-9 | INV.<br>G01T1/164 |
| Y | * alinéas [0024] - [0030], [0034], [0037], [0038], [0043], [0044], [0047] - [0049], [0076] *<br>* figures 1-3,8 *<br>- - - - - | 3-5 | G01T1/24 |
| Y | DELCOURT A ET AL: "GPU-accelerated CZT detector simulation with charge build-up effects",<br>20230203,<br>vol. 18, no. 2,<br>3 février 2023 (2023-02-03), XP020443605,<br>DOI: 10.1088/1748-0221/18/02/P02005 | 3-5 | |
| A | * le document en entier *<br>- - - - - | 1,2,6-9 | |
| A | US 2020/234471 A1 (LU YUJIE [US] ET AL) 23 juillet 2020 (2020-07-23)<br>* alinéas [0040], [0044] - [0046], [0054] - [0057], [0083] *<br>* figures 1,2B *<br>- - - - - | 1-9 | |

DOMAINES TECHNIQUES RECHERCHES (IPC)

G01T

Le présent rapport a été établi pour toutes les revendications

| Lieu de la recherche | Date d'achèvement de la recherche | Examinateur |
|---|---|---|
| La Haye | 6 mai 2025 | Wulveryck, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 1956

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-05-2025

| Document brevet cité au rapport de recherche | Date de publication | Membre(s) de la famille de brevet(s) | Date de publication |
|---|---|---|---|
| US 2021133589 A1 | 06-05-2021 | AUCUN | |
| US 2020234471 A1 | 23-07-2020 | EP 3683771 A1 | 22-07-2020 |
| | | JP 7337679 B2 | 04-09-2023 |
| | | JP 2020116377 A | 06-08-2020 |
| | | US 2020234471 A1 | 23-07-2020 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021133589 A

- US 9322937 B

**Littérature non-brevet citée dans la description**

- **G. MONTEMONT** ; **S. LUX** ; **O. MONNET** ; **S. STANCHINA** ; **L. VERGER**. Studying Spatial Resolution of CZT Detectors Using Sub-Pixel Positioning for SPECT. *IEEE Transactions on Nuclear Science*, vol. 61 (5), 2559-2566

- **YANG et al.** *Joint extimation of interaction position and energy déposition in semiconductor SPECT imaging sensors using fully connected neural network*